# EUROPÄISCHE PATENTSCHRIFT

(11) **EP 1 192 221 B1**
(45) Veröffentlichungstag und Bekanntmachung des Hinweises auf die Patenterteilung: **13.10.2004**
(21) Anmeldenummer: 00940395.7
(22) Anmeldetag: 21.06.2000
(51) Int. Cl.: C08L 67/02, C08L 69/00

(54) **POLYESTER/POLYCARBONAT BLENDS**
POLYESTER/POLYCARBONATE BLENDS
MELANGES POLYESTER/POLYCARBONATE

(30) Priorität: 01.07.1999 DE 19930527
(43) Veröffentlichungstag der Anmeldung: 03.04.2002
(73) Patentinhaber: BASF AKTIENGESELLSCHAFT, 67056 Ludwigshafen (DE)
(72) Erfinder: WEBER, Martin, D-67487 Maikammer (DE); HENNIG, Ingolf, D-68809 Neulussheim (DE)
(86) Internationale Anmeldenummer: PCT/EP2000/005740
(87) Internationale Veröffentlichungsnummer: WO 2001/002488

(56) Entgegenhaltungen:
- EP-A- 0 256 461
- EP-A- 0 373 465
- WO-A-91/17209
- GB-A- 1 569 296

## Beschreibung

Die Erfindung betrifft thermoplastische Formmassen enthaltend
A) 1 bis 97,85 Gew.-% mindestens eines thermoplastischen Polyesters
B) 1 bis 97,85 Gew.-% mindestens eines Polycarbonats
C) 1 bis 50 Gew.-% eines kautschukelastischen Polymerisates
D) 0,1 bis 5 Gew.-% eines phosphorhaltigen Stabilisators, wobei die Komponente D) aus einem organischen Phosphonit der allgemeinen Formel (I) aufgebaut ist: 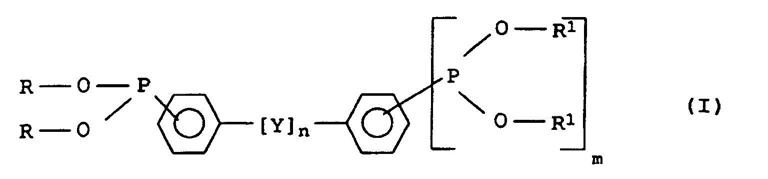 worin
   - m: 0 oder 1,
   - n: 0 oder 1,
   - Y: eine Sauerstoff-Schwefel- oder 1,4-Phenylen-Brücke oder ein Brückenglied der Formel -CH(R²)-; alle R-O- und R¹-O-Gruppen unabhängig voneinander, den Rest eines aliphatischen, alicyclischen oder aromatischen Alkohols, der bis zu drei Hydroxylgruppen enthalten kann, wobei jedoch die Hydroxylgruppen nicht so angeordnet sind, daß sie Teile eines Phosphor-enthaltenden Ringes sein können (als monovalente R-O-Gruppen bezeichnet),
   oder je zwei an ein Phosphoratom gebundene R-O-, bzw. R¹-Gruppen, jeweils unabhängig voneinander zusammen den Rest eines aliphatischen, alicyclischen oder aromatischen Alkohols mit insgesamt bis zu drei Hydroxylgruppen (als bivalente R-O-, bzw. R¹-O-Gruppen bezeichnet),
   - R²: Wasserstoff, C₁-C₈-Alkyl oder eine Gruppe der Formel COOR³ und
   - R³: C₁₋₈-Alkyl bedeuten
   oder aus mindestens einem anorganischen Salz von Phosphorsäuren aufgebaut ist,
E) 0,05 bis 2 Gew.-% einer organischen Säure
F) 0 bis 60 Gew.-% weiterer Zusatzstoffe,
wobei die Gewichtsprozente der Komponenten A) bis F) 100 % ergeben.
E) 0,05 bis 2 Gew.-% einer organischen Säure
F) 0 bis 60 Gew.-% weiterer Zusatzstoffe,
wobei die Gewichtsprozente der Komponenten A) bis F) 100 % ergeben.

Weiterhin betrifft die Erfindung die Verwendung der erfindungsgemäßen Formmassen zur Herstellung von Fasern, Folien und Formkörpern sowie die hierbei erhältlichen Formkörper jeglicher Art.

Polymermischungen finden in der Technik zunehmendes Interesse da sie maßgeschneiderte Eigenschaftskombinationen bieten. Von besonderem Interesse sind dabei Polymermischungen aus unverträglichen Polymeren, die ungewöhnliche Eigenschaftskombinationen aufweisen.

Polymermischungen auf Basis von Polyestern und Polycarbonaten sind bekannt: US 4 522 797, US 4 764 556, US 4 897 448, EP-A 180 648, DE-A 3302124. Die technisch wichtigen Produkte enthalten zur Verbesserung der Zähigkeit, insbesondere bei tiefen Temperaturen, auch Schlagzähmodifier, wobei bevorzugt MBS-Modifier, Acrylat-Pfropfkautschuke sowie Ethylencopolymere mit polaren Comonomeren verwendet werden.

Aus J. Devaux, P. Godard, J.P. Mercier, Polym. Eng. Sci., 22, 229 (1982) ist bekannt, dass im Polyester vorhandene Katalysatorreste bei der Schmelzekompoundierung mit Polycarbonat zur Umesterung führen. Dabei entstehen Copolymere, welche die mechanischen Eigenschaften der resultierenden Blends verbessern. Bei hohen Verarbeitungstemperaturen wird die Umesterung jedoch so schnell, dass die mechanischen und thermischen Eigenschaften der hergestellten Formkörper massiv beeinträchtigt werden. Des weiteren weisen die bei hohen Verarbeitungstemperaturen hergestellten Formmassen auch schlechte Oberflächenqualität auf (Schlieren, Verfärbungen).

Auch zur Verbesserung der Verarbeitungsstabilität von Polyester/Polycarbonat-Blends wurden bereits vielfältige Untersuchungen unternommen. So beschreibt z.B. die EP-A 114 288 Polyester/Polycarbonat-Blends, bei denen der zugesetzte MBS-Kautschuk in einem vorgelagerten Schritt mit einem Stabilisator vorgemischt wird. Durch diese Maßnahme werden die mechanischen Eigenschaften der Formmassen verbessert. Die Stabilität der Formmassen bei höherer Verarbeitungstemperatur ist jedoch verbesserungswürdig.

Die EP-A 634 435 beschreibt eine Katalysatormischung bestehend aus einer Ti-Verbindung und einer Phosphorverbindung, welche zur Herstellung von Polyestern verwendet werden kann. Entsprechend hergestellte Polyester zeigen in Blends mit Polycarbonat leicht verminderte Tendenz zur Umesterung.

In der US 4,452,932 werden beispielsweise ortho-substituierte aromatische Hydroxyverbindungen als Umesterungsschutz für Polycarbonat/Polybutylenterephthalat-Blends vorgeschlagen.

In der DE-A 19900891 wird ein Verfahren zum Vormischen von phosphoniten mit Polyestern vorgeschlagen, welches die Verarbeitungsstabilität verbessert.

Die EP-A 256 461 beschreibt Formmassen basierend auf Polycarbonat und Polyestern, welche geringe Mengen Sulfonsäuren enthalten. Die Produkte weisen zwar verbesserte Zähigkeit auf, die Verarbeitungsstabilität ist jedoch ungenügend.

Bei der Herstellung insbesondere großflächiger Teile treten aufgrund der langen Fließwege weiterhin Verarbeitungsprobleme auf, da die bislang bekannten Blends nicht ausreichend stabilisiert sind.

Aus der EP-A 373 465 sind Formmassen mit speziellen Phosphiten zur Verbesserung der Lackierbarkeit bekannt. Die GB-A 1 569 296 lehrt spezielle Phosphite/Phosponite bzw. Carbonsäuren als Stabilisatoren für PBT/PC-Blends.

Der vorliegenden Erfindung lag daher die Aufgabe zugrunde, Polyester-Polycarbonat-Blends zur Verfügung zu stellen, die eine verbesserte Verarbeitungsstabilität und mechanische Eigenschaften aufweisen. Insbesondere Wärmeformbeständigkeit und Schmelzestabilität für lange Zykluszeiten sollen verbessert werden.

Demgemäß wurden die eingangs definierten thermoplastischen Formmassen gefunden. Bevorzugte Ausführungsformen sind den Unteransprüchen zu entnehmen.

Als Komponente (A) enthalten die erfindungsgemäßen Formmassen 5 bis 97,85, bevorzugt 10 bis 92,7 und insbesondere 12,5 bis 89,85 Gew.-% eines thermoplastischen Polyesters.

Allgemein werden Polyester A) auf Basis von aromatischen Dicarbonsäuren und einer aliphatischen oder aromatischen Dihydroxyverbindung verwendet.

Eine erste Gruppe bevorzugter Polyester sind Polyalkylenterephthalate mit 2 bis 10 C-Atomen im Alkoholteil.

Derartige Polyalkylenterephthalate sind an sich bekannt und in der Literatur beschrieben. Sie enthalten einen aromatischen Ring in der Hauptkette, der von der aromatischen Dicarbonsäure stammt. Der aromatische Ring kann auch substituiert sein, z.B. durch Halogen wie Chlor und Brom oder durch C₁-C₄-Alkylgruppen wie Methyl-, Ethyl-, i- bzw. n-Propyl- und n-, i- bzw. t-Butylgruppen.

Diese Polyalkylenterephthalate können durch Umsetzung von aromatischen Dicarbonsäuren, deren Estern oder anderen esterbildenden Derivaten mit aliphatischen Dihydroxyverbindungen in an sich bekannter Weise hergestellt werden.

Als bevorzugte Dicarbonsäuren sind 2,6-Naphthalindicarbonsäure, Terephthalsäure und Isophthalsäure oder deren Mischungen zu nennen. Bis zu 30 mol-%, vorzugsweise nicht mehr als 10 mol-% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt werden.

Von den aliphatischen Dihydroxyverbindungen werden Diole mit 2 bis 6 Kohlenstoffatomen, insbesondere 1,2-Ethandiol, 1,3-Propandiol, 1,4-Butandiol, 1,6-Hexandiol, 1,4-Hexandiol, 1,4-Cyclohexandiol, 1,4-Cyclohexandimethanol und Neopentylglykol oder deren Mischungen bevorzugt.

Als besonders bevorzugte Polyester (A) sind Polyalkylenterephthalate, die sich von Alkandiolen mit 2 bis 6 C-Atomen ableiten, zu nennen. Von diesen werden insbesondere Polyethylenterephthalat, Polypropylenterephthalat und Polybutylenterephthalat oder deren Mischungen bevorzugt. Weiterhin bevorzugt sind PET und/oder PBT, welche bis zu 1 Gew.-%, vorzugsweise bis zu 0,75 Gew.-% 1,6-Hexandiol und/oder 2-Methyl-1,5-Pentandiol als weitere Monomereinheiten enthalten.

Die Viskositätszahl der Polyester (A) liegt im allgemeinen im Bereich von 50 bis 220, vorzugsweise von 80 bis 160 (gemessen in einer 0,5 gew.-%igen Lösung in einem Phenol/o-Dichlorbenzolgemisch (Gew.-Verh. 1:1 bei 25°C) gemäß ISO 1628.

Insbesondere bevorzugt sind Polyester, deren Carboxylendgruppengehalt bis zu 100 mval/kg, bevorzugt bis zu 50 mval/kg und insbesondere bis zu 40 mval/kg Polyester beträgt. Derartige Polyester können beispielsweise nach dem Verfahren der DE-A 44 01 055 hergestellt werden. Der Carboxylendgruppengehalt wird üblicherweise durch Titrationsverfahren (z.B. Potentiometrie) bestimmt.

Insbesondere bevorzugte Formmassen enthalten als Komponente A) eine Mischung aus Polyestern, welche verschieden von PBT sind, wie beispielsweise Polyethylenterephthalat (PET). Der Anteil z.B. des Polyethylenterephthalates beträgt vorzugsweise in der Mischung bis zu 50, insbesondere 10 bis 30 Gew.-%, bezogen auf 100 Gew.-% A).

Weiterhin ist es vorteilhaft PET Rezyklate (auch scrap-PET genannt) gegebenenfalls in Mischung mit Polyalkylenterephthalaten wie PBT einzusetzen.

Unter Rezyklaten versteht man im allgemeinen:
1) sog. Post Industrial Rezyklat: hierbei handelt es sich um Produktionsabfälle bei der Polykondensation oder bei der Verarbeitung z.B. Angüsse bei der Spritzgußverarbeitung, Anfahrware bei der Spritzgußverarbeitung oder Extrusion oder Randabschnitte von extrudierten Platten oder Folien.
2) Post Consumer Rezyklat: hierbei handelt es sich um Kunststoffartikel, die nach der Nutzung durch den Endverbraucher gesammelt und aufbereitet werden. Der mengenmäßig bei weitem dominierende Artikel sind blasgeformte PET Flaschen für Mineralwasser, Softdrinks und Säfte.

Beide Arten von Rezyklat können entweder als Mahlgut oder in Form von Granulat vorliegen. Im letzteren Fall werden die Rohrezyklate nach der Auftrennung und Reinigung in einem Extruder aufgeschmolzen und granuliert. Hierdurch wird meist das Handling, die Rieselfähigkeit und die Dosierbarkeit für weitere Verarbeitungsschritte erleichtert.

Sowohl granulierte als auch als Mahlgut vorliegende Rezyklate können zum Einsatz kommen, wobei die maximale Kantenlänge 6 mm, vorzugsweise kleiner 5 mm betragen sollte.

Aufgrund der hydrolytischen Spaltung von Polyestern bei der Verarbeitung (durch Feuchtigkeitsspuren) empfiehlt es sich, das Rezyklat vorzutrocknen. Der Restfeuchtegehalt nach der Trocknung beträgt vorzugsweise 0,01 bis 0,7, insbesondere 0,2 bis 0,6 %.

Als weitere Gruppe sind voll aromatische Polyester zu nennen, die sich von aromatischen Dicarbonsäuren und aromatischen Dihydroxyverbindungen ableiten.

Als aromatische Dicarbonsäuren eignen sich die bereits bei den Polyalkylenterephthalaten beschriebenen Verbindungen. Bevorzugt werden Mischungen aus 5 bis 100 mol-% Isophthalsäure und 0 bis 95 mol-% Terephthalsäure, insbesondere Mischungen von etwa 80 % Terephthalsäure mit 20 % Isophthalsäure bis etwa äquivalente Mischungen dieser beiden Säuren verwendet.

Die aromatischen Dihydroxyverbindungen haben vorzugsweise die allgemeine Formel 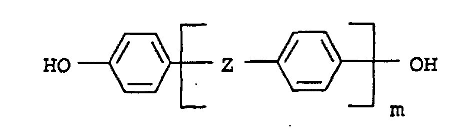 in der Z eine Alkylen- oder Cycloalkylengruppe mit bis zu 8 C-Atomen, eine Arylengruppe mit bis zu 12 C-Atomen, eine Carbonylgruppe, eine Sulfonylgruppe, ein Sauerstoff- oder Schwefelatom oder eine chemische Bindung darstellt und in der m den Wert 0 bis 2 hat. Die Verbindungen können an den Phenylengruppen auch C₁-C₆-Alkyl- oder Alkoxygruppen und Fluor, Chlor oder Brom als Substituenten tragen.

Als Stammkörper dieser Verbindungen seinen beispielsweise
Dihydroxydiphenyl,
Di-(hydroxyphenyl)alkan,
Di-(hydroxyphenyl)cycloalkan,
Di-(hydroxyphenyl)sulfid,
Di-(hydroxyphenyl)ether,
Di-(hydroxyphenyl)keton,
di- (hydroxyphenyl) sulfoxid,
α,α'-Di-(hydroxyphenyl)-dialkylbenzol,
Di-(hydroxyphenyl)sulfon, Di-(hydroxybenzoyl)benzol
Resorcin und
Hydrochinon sowie deren kernalkylierte oder kernhalogenierte
Derivate genannt.

Von diesen werden
4,4'-Dihydroxydiphenyl,
2,4-Di-(4'-hydroxyphenyl)-2-methylbutan
α,α'-Di-(4-hydroxyphenyl)-p-diisopropylbenzol,
2,2-Di-(3'-methyl-4'-hydroxyphenyl)propan und
2,2-Di-(3'-chlor-4'-hydroxyphenyl)propan,
sowie insbesondere
2,2-Di-(4'-hydroxyphenyl)propan
2,2-Di-(3',5-dichlordihydroxyphenyl)propan,
1,1-Di-(4'-hydroxyphenyl)cyclohexan,
3,4'-Dihydroxybenzophenon,
4,4'-Dihydroxydiphenylsulfon und
2,2-Di(3',5'-dimethyl-4'-hydroxyphenyl)propan
oder deren Mischungen bevorzugt.

Selbstverständlich kann man auch Mischungen von Polyalkylenterephthalaten und vollaromatischen Polyestern einsetzen. Diese enthalten im allgemeinen 20 bis 98 Gew.-% des Polyalkylenterephthalates und 2 bis 80 Gew.-% des vollaromatischen Polyesters.

Selbstverständlich können auch Polyesterblockcopolymere wie Copolyetherester verwendet werden. Derartige Produkte sind an sich bekannt und in der Literatur, z.B. in der US-A 3 651 014, beschrieben. Auch im Handel sind entsprechende Produkte erhältlich, z.B. Hytrel® (DuPont).

Als Komponente B) enthalten die Formmassen erfindungsgemäß mindestens ein Polycarbonat in Mengen von 1 bis 97,85, vorzugsweise 5 bis 87,7 und insbesondere von 7,5 bis 84,15 Gew.-%.

Bevorzugt werden als Komponente B) halogenfreie Polycarbonate eingesetzt. Geeignete halogenfreie Polycarbonate sind beispielsweise solche auf Basis von Diphenolen der allgemeinen Formel 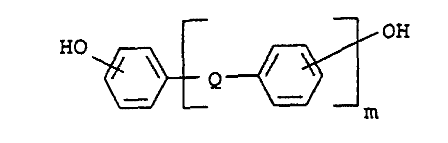 worin Q eine Einfachbindung, eine C₁- bis C₈-Alkylen-, eine C₂- bis C₃-Alkyliden-, eine C₃- bis C₆-Cycloalkylidengruppe, eine C₆- bis C₁₂-Arylengruppe sowie -O-, -S- oder -SO₂- bedeutet und m eine ganze Zahl von 0 bis 2 ist.

Die Diphenole können an den Phenylenresten auch Substituenten haben wie C₁- bis C₆-Alkyl- oder C₁- bis C₆-Alkoxy.

Bevorzugte Diphenole der Formel sind beispielsweise Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan. Besonders bevorzugt sind 2,2-Bis-(4-hydroxyphenyl)-propan und 1,1-Bis-(4-hydroxyphenyl)-cyclohexan, sowie 1,1-Bis-(4-hydroxyphenyl)-3,3,5-trimethylcyclohexan.

Sowohl Homopolycarbonate als auch Copolycarbonate sind als Komponente B geeignet, bevorzugt sind neben dem Bisphenol A-Homopolymerisat die Copolycarbonate von Bisphenol A.

Die geeigneten Polycarbonate können in bekannter Weise verzweigt sein, und zwar vorzugsweise durch den Einbau von 0,05 bis 2,0 mol-%, bezogen auf die Summe der eingesetzten Diphenole, an mindestens trifunktionellen Verbindungen, beispielsweise solchen mit drei oder mehr als drei phenolischen OH-Gruppen.

Als besonders geeignet haben sich Polycarbonate erwiesen, die relative Viskositäten ηᵣₑₗ von 1,10 bis 1,50, insbesondere von 1,25 bis 1,40 aufweisen. Dies entspricht mittleren Molekulargewichten M_{w} (Gewichtsmittelwert) von 10 000 bis 200 000, vorzugsweise von 20 000 bis 80 000 g/mol.

Die Diphenole der allgemeinen Formel sind an sich bekannt oder nach bekannten Verfahren herstellbar.

Die Herstellung der Polycarbonate kann beispielsweise durch Umsetzung der Diphenole mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird. (Bezüglich polydiorganosiloxanhaltigen Polycarbonaten siehe beispielsweise DE-OS 33 34 782).

Geeignete Kettenabbrecher sind beispielsweise Phenol, p-t-Butylphenol aber auch langkettige Alkylphenole wie 4-(1,3-Tetramethylbutyl)-phenol, gemäß DE-OS 28 42 005 oder Monoalkylphenole oder Dialkylphenole mit insgesamt 8 bis 20 C-Atomen in den Alkylsubstituenten gemäß DE-A 35 06 472, wie p-Nonylphenyl, 3,5-di-t-Butylphenol, p-t-Octylphenol, p-Dodecylphenol, 2-(3,5-dimethyl-heptyl)-phenol und 4-(3,5-Dimethylheptyl)-phenol.

Halogenfreie Polycarbonate im Sinne der vorliegenden Erfindung bedeutet, daß die Polycarbonate aus halogenfreien Diphenolen, halogenfreien Kettenabbrechern und gegebenenfalls halogenfreien Verzweigern aufgebaut sind, wobei der Gehalt an untergeordneten ppm-Mengen an verseifbarem Chlor, resultierend beispielsweise aus der Herstellung der Polycarbonate mit Phosgen nach dem Phasengrenzflächenverfahren, nicht als halogenhaltig im Sinne der Erfindung anzusehen ist. Derartige Polycarbonate mit ppm-Gehalten an verseifbarem Chlor sind halogenfreie Polycarbonate im Sinne vorliegender Erfindung.

Als weitere geeignete Komponenten B) seien amorphe Polyestercarbonate genannt, wobei Phosgen gegen aromatische Dicarbonsäureeinheiten wie Isophthalsäure und/oder Terephthalsäureeinheiten, bei der Herstellung ersetzt wurde. Für nähere Einzelheiten sei an dieser Stelle auf die EP-A 711 810 verwiesen.

Weitere geeignete Copolycarbonate mit Cycloalkylresten als Monomereinheiten sind in der EP-A 365 916 beschrieben.

Weiterhin kann Bisphenol A durch Bisphenol TMC ersetzt werden. Derartige Polycarbonate sind unter dem Warenzeichen APEC HT® der Firma Bayer erhältlich.

Als Komponente C) enthalten die erfindungsgemäßen Formmassen 1 bis 50, vorzugsweise 2 bis 30 und insbesondere 3 bis 25 Gew.-% eines kautschukelastischen Polymerisates (oft auch als Schlagzähmodifier, Elastomere oder Kautschuke bezeichnet).

Ganz allgemein handelt es sich dabei um Copolymerisate die bevorzugt aus mindestens zwei der folgenden Monomeren aufgebaut sind: Ethylen, Propylen, Butadien, Isobuten, Isopren, Chloropren, Vinylacetat, Styrol, Acrylnitril und Acryl- bzw. Methacrylsäureester mit 1 bis 18 C-Atomen in der Alkoholkomponente.

Derartige Polymere werden z.B. in Houben-Weyl, Methoden der organischen Chemie, Bd. 14/1 (Georg-Thieme-Verlag, Stuttgart, 1961). Seiten 392 bis 406 und in der Monographie von C.B. Bucknall, "Toughened Plastics" (Applied Science Publishers, London, 1977) beschrieben.

Im folgenden werden einige bevorzugte Arten solcher Elastomerer vorgestellt.

Bevorzugte Arten von solchen Elastomeren sind die sog. Ethylen-Propylen (EPM) bzw. Ethylen-Propylen-Dien-(EPDM)-Kautschuke.

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo(5.2.1.0.2.6)-3,8-decadien oder deren Mischungen genannt. Bevorzugt werden Hexa-1,5-dien, 5-Ethylidennorbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

EPM- bzw. EPDM-Kautschuke können vorzugsweise auch mit reaktiven Carbonsäuren oder deren Derivaten gepfropft sein. Hier seien z.B. Acrylsäure, Methacrylsäure und deren Derivate, z.B. Glycidyl(meth)acrylat, sowie Maleinsäureanhydrid genannt.

Außerdem sind Polyolefincopolymere geeignet, welche durch Polymerisation in Gegenwart eines Metallocenkatalysators erhältlich sind.

Besonders bevorzugte Elastomere C) sind Polyethylenocten- und Polyethylenbutencopolymerisate mit einem Anteil bis zu 50 Gew.-%, vorzugsweise bis zu 45 Gew.-% von Octen und/oder Buten.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren wie Maleinsäure und Fumarsäure oder Derivate dieser Säuren, z.B. Ester und Anhydride, und/oder Epoxy-Gruppen enthaltende Monomere enthalten. Diese Dicarbonsäurederivate bzw. Epoxygruppen enthaltende Monomere werden vorzugsweise durch Zugabe von Dicarbonsäure- bzw. Epoxygruppen enthaltenden Monomeren der allgemeinen Formeln I oder II oder III oder IV zum Monomerengemisch in den Kautschuk eingebaut

R¹C(COOR²)=C(COOR³)R⁴ (I)

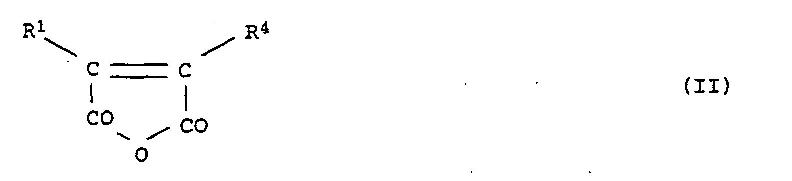

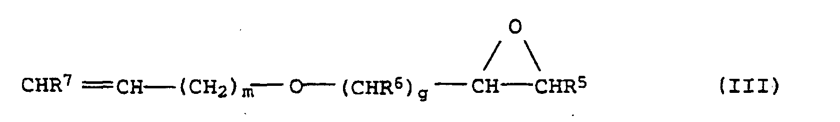

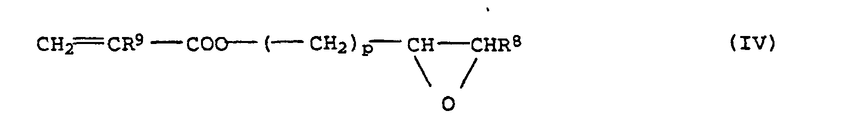

wobei R¹ bis R⁹ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist.

Vorzugsweise bedeuten die Reste R¹ bis R⁹ Wasserstoff, wobei m für 0 oder 1 und g für 1 steht. Die entsprechenden Verbindungen sind Maleinsäure, Fumarsäure, Maleinsäureanhydrid, Allylglycidylether und Vinylglycidylether.

Bevorzugte Verbindungen der Formeln I, II und IV sind Maleinsäure, Maleinsäureanhydrid und Epoxygruppen-enthaltende Ester der Acrylsäure und/oder Methacrylsäure, wie Glycidylacrylat, Glycidylmethacrylat und die Ester mit tertiären Alkoholen, wie t-Butylacrylat. Letztere weisen zwar keine freien Carboxylgruppen auf, kommen in ihrem Verhalten aber den freien Säuren nahe und werden deshalb als Monomere mit latenten Carboxylgruppen bezeichnet.

Vorteilhaft bestehen die Copolymeren aus 50 bis 98. Gew.-% Ethylen, 0,1 bis 20 Gew.-% Epoxygruppen enthaltenden Monomeren und/oder Methacrylsäure und/oder Säureanhydridgruppen enthaltenden Monomeren sowie der restlichen Menge an (Meth)acrylsäureestern.

Besonders bevorzugt sind Copolymerisate aus
- 50 bis 98,: insbesondere 55 bis 95 Gew.-% Ethylen,
- 0,1 bis 40,: insbesondere 0,3 bis 20 Gew.-% Glycidylacrylat und/oder Glycidylmethacrylat, (Meth)acrylsäure und/oder Maleinsäureanhydrid, und
- 1 bis 45,: insbesondere 10 bis 40 Gew.-% n-Butylacrylat und/oder 2-Ethylhexylacrylat.

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerization" beschrieben wird. Die verwendbaren Emulgatoren und Katalystoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflußt.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel 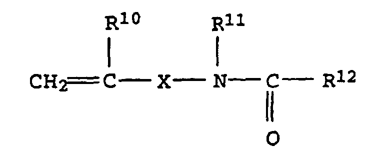 eingeführt werden können,
wobei die Substituenten folgende Bedeutung haben können:
- R¹⁰: Wasserstoff oder eine C₁- bis C₄-Alkylgruppe,
- R¹¹: Wasserstoff, eine C₁- bis C₈-Alkylgruppe oder eine Arylgruppe, insbesondere Phenyl,
- R¹²: Wasserstoff, eine C₁- bis C₁₀-Alkyl-, eine C₆- bis C₁₂-Arylgruppe oder -OR¹³
- R¹³: eine C₁- bis C₈-Alkyl- oder C₆- bis C₁₂-Arylgruppe, die gegebenenfalls mit O- oder N-haltigen Gruppen substituiert sein können,
- X: eine chemische Bindung, eine C₁- bis C₁₀-Alkylen- oder C₆-C₁₂-Arylengruppe oder 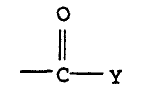
- Y: O-Z oder NH-Z und
- Z: eine C₁- bis C₁₀-Alkylen- oder C₆- bis C₁₂-Arylengruppe.

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)-ethylmethacrylat, (N,N-Dimethylamino)ethylacrylat, (N,N-Dimethylamino)-methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können auch sogenannten pfropfvernetzende Monomere (graftlinking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im allgemeinen beträgt der Anteil dieser vernetzenden Monomeren an dem schlagzäh modifizierenden Polymer bis zu 5 Gew.-%, vorzugsweise nicht mehr als 3 Gew.-%, bezogen auf das schlagzäh modifizierende Polymere.

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Typ | Monomere für den Kern | Monomere für die Hülle |
|---|---|---|
| I | Buta-1,3-dien, Isopren, n-Butylacrylat, Ethylhexylacrylat oder deren Mischungen | Styrol, Acrylnitril, Methylmethacrylat |
| II | wie I aber unter Mitverwendung von Vernetzern | wie I |
| III | wie I oder II | n-Butylacrylat, Ethylacrylat, Methylacrylat, Buta-1,3-dien, Isopren, Ethylhexylacrylat |
| IV | wie I oder II | wie I oder III aber unter Mitverwendung von Monomeren mit reaktiven Gruppen wie hierin beschrieben |
| V | Styrol, Acrylnitril, Methylmethacrylat oder deren Mischungen | erste Hülle aus Monomeren wie unter I und II für den Kern beschrieben zweite Hülle wie unter I oder IV für die Hülle beschrieben |

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat/(Meth)acrylsäure-Copolymere, n-Butylacrylat/Glycidylacrylat- oder n-Butylacrylat/Glycidylmethacrylat-Copolymere, Pfropfpolymerisate mit einem inneren Kern aus n-Butylacrylat oder auf Butadienbasis und einer äußeren Hülle aus den vorstehend genannten Copolymeren und Copolymere von Ethylen mit Comonomeren, die reaktive Gruppen liefern.

Die beschriebenen Elastomere können auch nach anderen üblichen Verfahren, z.B. durch Suspensionspolymerisation, hergestellt werden.

Siliconkautschuke, wie in der DE-A 37 25 576, der EP-A 235 690, der DE-A 38 00 603 und der EP-A 319 290 beschrieben, sind ebenfalls bevorzugt.

Selbstverständlich können auch Mischungen der vorstehend aufgeführten Kautschuktypen eingesetzt werden.

Geeignete phosphorhaltige Stabilisatoren D) sind vorzugsweise organische Phosphonite der allgemeinen Formel I 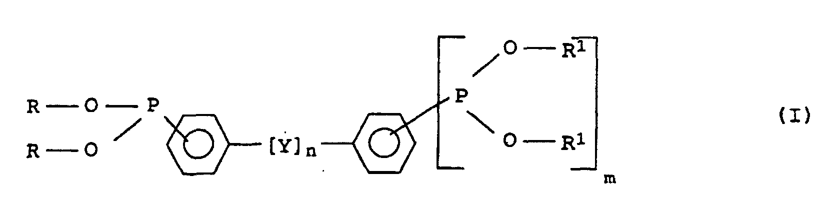 worin
- m: 0 oder 1,
- n: 0 oder 1,
- y: eine Sauerstoff-, Schwefel- oder 1,4-Phenylen-Brücke oder ein Brückenglied der Formel -CH(R²)-; alle R-O- und R¹-Q-Gruppen unabhängig voneinander, den Rest eines aliphatischen, alicyclischen oder aromatischen Alkohols der bis zu drei Hydroxylgruppen enthalten sein kann, wobei jedoch die Hydroxylgruppen nicht so angeordnet sind, daß sie Teile eines Phosphor-enthaltenden Ringes sein können (als monovalente R-O-Gruppen bezeichnet),
oder je zwei an ein Phosphoratom gebundene R-O-, bzw. R¹-O-Gruppen, jeweils unabhängig voneinander zusammen den Rest eines aliphatischen, alicyclischen oder aromatischen Alkohols mit insgesamt bis zu drei Hydroxylgruppen (als bivalente R-O-, bzw. R¹-O-Gruppen bezeichnet),
- R²: Wasserstoff, C₁-C₈-Alkyl oder eine Gruppe der Formel COOR³ und
- R³: C₁₋₈-Alkyl bedeuten.

Bevorzugt ist mindestens eine R-O und mindestens R¹-O-Gruppe, ein Phenolrest, welcher in 2-Stellung eine sterisch gehinderte Gruppe, insbesondere t-Butylreste, trägt.

Besonders bevorzugt ist Tetrakis-(2,4-di-tert.-butylphenyl)-biphenylen-diphosphonit, welches als Irgaphos® PEPQ der Firma Ciba Geigy AG im Handel erhältlich ist.

Wenn R-O- und R¹-O- divalente Reste sind, leiten sie sich vorzugsweise von zwei oder dreiwertigen Alkoholen ab.

Vorzugsweise bedeutet R gleich R¹ und dieses ist Alkyl, Aralkyl (vorzugsweise gegebenenfalls subst. Phenyl oder Phenylen), Aryl (vorzugsweise gegebenenfalls subst. Phenyl) oder eine Gruppe der Formel α 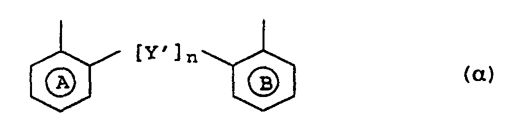 worin die Kerne A und B weitere Substituenten tragen können und
Y' eine Sauerstoff- oder Schwefelbrücke oder ein Brückenglied der Formel -CH(R³)-,
- R²: Wasserstoff, C₁-C₈-Alkyl oder eine Gruppe der Formel -COOR³ und
- R³: C₁₋₈-Alkyl und
- n: 0 oder 1 bedeuten (als divalentes R' bezeichnet).

Besonders bevorzugte Reste R sind die Reste R", wobei dieses C₁₋₂₂-Alkyl, Phenyl, das 1 bis 3 Substituenten aus der Reihe Cyan C₁₋₂₂-Alkyl, C₁₋₂₂-Alkoxy, Benzyl, Phenyl, 2,2,6,6-Tetramethyl-piperidyl-4-, Hydroxy, C₁₋₈-Alkyl-phenyl, Carboxyl, -C(CH₃)₂-C₆H₅, -COO-C₁₋₂₂-Alkyl, CH₂CH₂COOH, -CH₂CH₂COO-, C₁₋₂₂-Alkyl oder -CH₂-S-C₁₋₂₂-Alkyl tragen kann; oder eine Gruppe der Formel i bis vii. 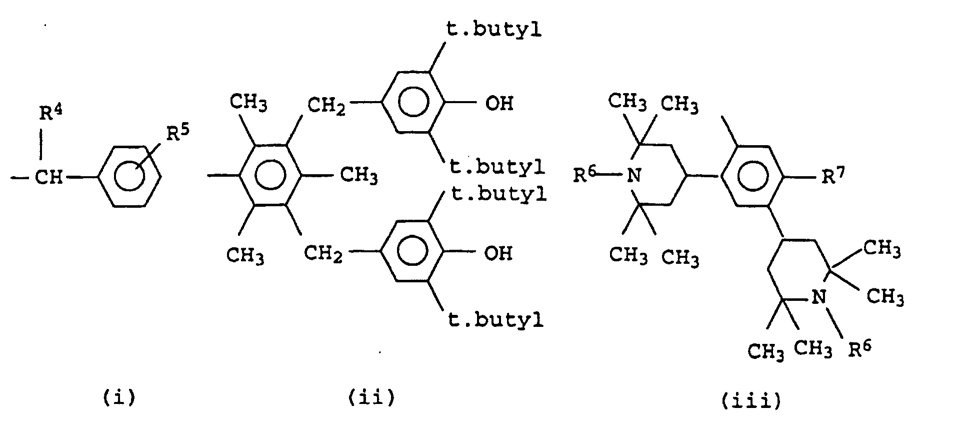 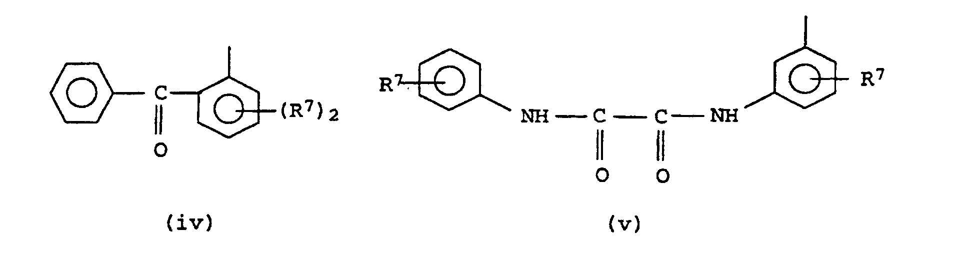 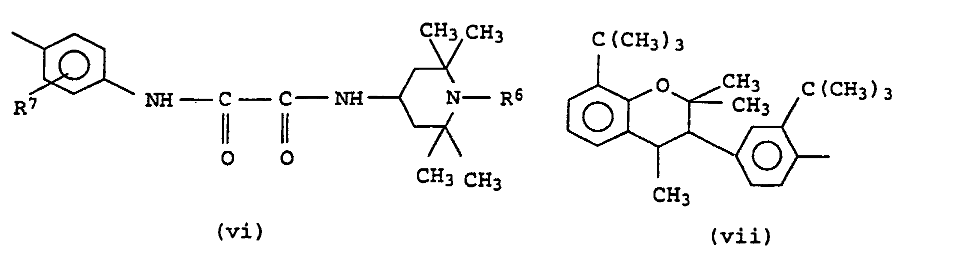 oder zwei R" gemeinsam eine Gruppe der Formel viii 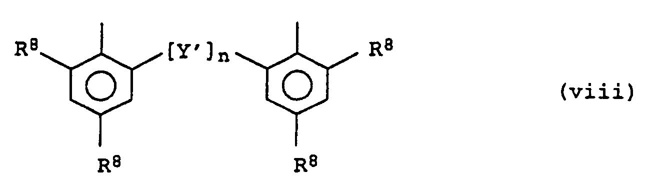 bedeuten, wobei
- R⁸: Wasserstoff oder C₁₋₂₂-Alkyl,
- R⁶: Wasserstoff, C₁₋₄-Alkyl oder -CO-C₁₋₈-Alkyl,
- R⁴: Wasserstoff oder C₁₋₂₂-Alkyl,
- R⁵: Wasserstoff, C₁₋₂₂-Alkyl, C₁₋₂₂-Alkoxy, Benzyl, Cyan, Phenyl, Hydroxyl, C₁₋₈-Alkylphenyl, C₁₋₂₂-Alkoxycarbonyl, C₁₋₂₂-Alkoxycarbonylethyl, Carboxyethyl, 2,2,6,6-Tetramethylpiperidyl-4-oder eine Gruppe der Formel -CH₂-S-C₁₋₂₂-Alkyl oder -C(CH₃)₂-C₆H₅ und
- R⁷: Wasserstoff, C₁₋₂₂-Alkyl, Hydroxy oder Alkoxy bedeuten und
- Y': und n die oben angegebenen Bedeutungen besitzen.

Insbesondere bevorzugt als Reste R sind die Reste R", die eine der Formeln a bis g 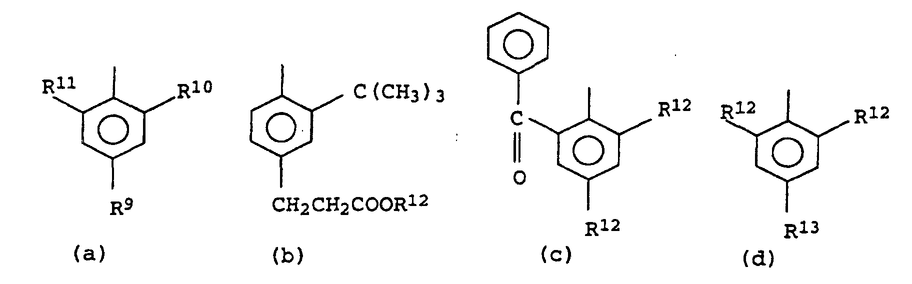 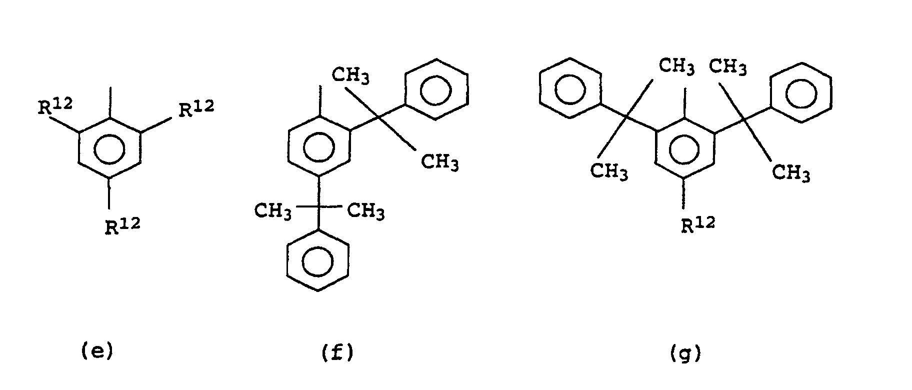 entsprechen, worin
- R⁹: Wasserstoff, C₁₋₈-Alkyl, C₁₋₈-Alkoxy, Phenyl, C₁₋₈-Alkylphenyl oder Phenyl-C₁₋₈-Alkylphenyl oder Phenyl-C₁₋₄-alkyl,
- R¹⁰: und R¹¹ unabhängig voneinander, Wasserstoff, C₁₋₂₂-Alkyl, Phenyl oder C₁₋₈-Alkylphenyl,
- R¹²: Wasserstoff oder C₁₋₈-Alkyl und
- R¹³: Cyan, Carboxyl oder C₁₋₈-Alkoxycarbonyl
bedeuten.

Unter den Gruppen der Formel a sind 2-tert.-Butylphenyl, 2-Phenylphenyl, 2-(1',1'-Dimethyl-propyl)-phenyl, 2-Cyclohexylphenyl, 2-tert.-Butyl-4-methylphenyl, 2,4-Di-tert.-amylphenyl, 2,4-Di-tert.-butylphenyl, 2,4-Di-phenylphenyl, 2,4-Di-tert.-octylphenyl, 2-tert.-Butyl-4-phenyl-phenyl, 2,4-Bis-(1',1'-dimethylpropyl)-phenyl, 2-(1'-Phenyl-1'-methylethyl)-phenyl, 2,4-Bis-(1'-Phenyl-1'-methylethyl)-phenyl und 2,4-Di-tert.-butyl-6-methylphenyl bevorzugt.

Geeignete anorganische Umesterungsstabilisatoren sind z.B. in der US 5 674 928 beschrieben. Als besonders geeignet seien saure Salze der Phosphorsäure wie z.B. Monozinkphosphat, Calciumdihydrogenphosphat, Natriumdihydrogenphosphat und Kaliumdihydrogenphosphat genannt. Daneben können auch Phosphate wie z.B. Zn-Phosphat und Kupfer-Phosphat verwendet werden. Geeignet sind auch andere Metallphosphate mit Metallen der ersten und zweiten Nebengruppe. Daneben können auch P-enthaltende Säuren wie z.B. Phosphorsäure Verwendung finden. Geeignete Verbindungen sind z.B. Na₃HP₂O₇, K₂H₂P₂O₇, KaH₂P₂O₇ und Na₂H₂P₂O₇.

Die Stabilisatoren D) sind in den erfindungsgemäßen Formmassen in Mengen von 0,1 bis 5, vorzugsweise 0,2 bis 2,5 und insbesondere 0,25 bis 2 Gew.-% enthalten.

Gemäß der Erfindung enthalten die Formmassen eine oder eine Mischung aus zwei oder mehr unterschiedlichen organischen Säuren, insbesondere niedermolekularen halogenfreien Säuren als Komponente E). Der Anteil dieser Komponente an den Formmassen beträgt im allgemeinen von 0,05 bis 2, bevorzugt von 0,1 bis 1,8 Gew.-%, insbesondere 0,1 bis 1,5, bezogen auf das Gesamtgewicht der Formmassen.

Unter niedermolekular im Sinne der vorliegenden Erfindung werden bis zu mehrkernige, beispielsweise bis zu fünfkernige Verbindungen, insbesondere monomolekulare Verbindungen verstanden. Selbstverständlich werden auch die säuretypischen Assoziate unter dem Begriff Säure verstanden. Mitumfaßt sind ferner Säurehydrate.

Die Säuren sind erfindungsgemäß halogenfrei, d.h. enthalten im molekularen Gerüst keine Halogene. Säuren, die geringfügige halogenhaltige Verunreinigungen aufweisen, sind dagegen erfindungsgemäß mitumfaßt.

Vorteilhafterweise werden Säuren eingesetzt, die bei den Verarbeitungstemperaturen nicht oder nur gering flüchtig sind bzw. sich bei Temperaturen von bis zu etwa 300 °C nicht zersetzen.

Die Säuren können eine, zwei oder mehrere, beispielsweise bis zu zehn Säuregruppen enthalten.

Bevorzugt werden organische Säuren eingesetzt. Es kommen sowohl aromatische als auch aliphatische Säuren in Betracht. Ebenso können aliphatisch/aromatische Säuren verwendet werden. Zu den bevorzugten Säuren zählen Palmitinsäure, Stearinsäure, Benzoesäure, Isophthalsäure, Terephthalsäure, Trimellithsäure, Sulfonsäuren wie p-Toluolsulfonsäure, Fumarsäure, Zitronensäure, Mandelsäure oder Weinsäure.

Besonders bevorzugt werden Zitronensäure oder p-Toluolsulfonsäure oder deren Mischungen eingesetzt. Beispielsweise kann darin der Gewichtsanteil der Zitronensäure von 1 bis 99, bevorzugt von 10 bis 90 % und der der p-Toluolsulfonsäure entsprechend von 1 bis 99, bevorzugt von 10 bis 90 % betragen.

Neben den wesentlichen Komponenten A), B), C), D) und E) können den Formmassen weitere Zusatzstoffe F) zugegeben werden, in Mengen bis zu 60 Gew.-%, vorzugsweise bis zu 50 Gew.-%.

Als faser- oder teilchenförmige Füllstoffe seien Kohlenstoffasern, Glasfasern, Glaskugeln, amorphe Kieselsäure, Asbest, Calciumsilicat, Calciummetasilicat, Magnesiumcarbonat, Kaolin, Kreide, gepulverter Quarz, Glimmer, Bariumsulfat und Feldspat genannt, die in Mengen bis zu 50 Gew.-%, insbesondere bis zu 40 % eingesetzt werden.

Als bevorzugte faserförmige Füllstoffe seien Kohlenstoffasern, Aramid-Fasern und Kaliumtitanat-Fasern genannt, wobei Glasfasern als E-Glas besonders bevorzugt sind. Diese können als Rovings oder Schnittglas in den handelsüblichen Formen eingesetzt werden.

Die faserförmigen Füllstoffe können zur besseren Verträglichkeit mit dem Thermoplasten mit einer Silanverbindung oberflächlich vorbehandelt sein.

Geeignete Silanverbindungen sind solche der allgemeinen Formel

(X-(CH₂)ₙ)ₖ-Si-(O-CₘH₂ₘ₊₁)₄₋ₖ

in der die Substituenten folgende Bedeutung haben:
- X: NH₂-, 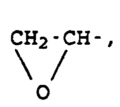 HO-,
- n: eine ganze Zahl von 2 bis 10, bevorzugt 3 bis 4
- m: eine ganze Zahl von 1 bis 5, bevorzugt 1 bis 2
- k: eine ganze Zahl von 1 bis 3, bevorzugt 1

Bevorzugte Silanverbindungen sind Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Die Silanverbindungen werden im allgemeinen in Mengen von 0,05 bis 5, vorzugsweise 0,5 bis 1,5 und insbesondere 0,8 bis 1 Gew.-% (bezogen auf F) zur Oberflächenbeschichtung eingesetzt.

Geeignet sind auch nadelförmige mineralische Füllstoffe.

Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein L/D-(Länge Durchmesser)-Verhältnis von 3 : 1 bis 35 : 1, bevorzugt von 8 : 1 bis 11 : 1 auf. Der mineralische Füllstoff kann gegebenenfalls mit den vorstehend genannten Silanverbindungen vorbehandelt sein; die Vorbehandlung ist jedoch nicht unbedingt erforderlich.

Als weitere Füllstoffe seien Kaolin, calciniertes Kaolin, Wollastonit, Talkum und Kreide genannt.

Als Komponente F) können die erfindungsgemäßen thermoplastischen Formmassen übliche Verarbeitungshilfsmittel wie Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, Keimbildungsmittel, Weichmacher usw. enthalten.

Als Beispiele für Oxidationsverzögerer und Wärmestabilisatoren sind sterisch gehinderte Phenole und/oder Phosphite, Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmassen genannt, welche verschieden von B) sind.

Als UV-Stabilisatoren, die im allgemeinen in Mengen bis zu 2 Gew.-%, bezogen auf die Formmasse, verwendet werden, seien verschiedene substituierte Resorcine, Salicylate, Benzotriazole und Benzophenone genannt.

Es können anorganische Pigmente, wie Titandioxid, Ultramarinblau, Eisenoxid und Ruß, weiterhin organische Pigmente, wie Phthalocyanine, Chinacridone, Perylene sowie Farbstoffe, wie Nigrosin und Anthrachinone als Farbmittel zugesetzt werden.

Als Keimbildungsmittel können Natriumphenylphosphinat, Aluminiumoxid, Siliziumdioxid sowie bevorzugt Talkum eingesetzt werden.

Gleit- und Entformungsmittel, werden üblicherweise in Mengen bis zu 1 Gew.-% eingesetzt. Es sind bevorzugt langkettige Fettsäuren (z.B. Stearinsäure oder Behensäure), deren Salze (z.B. Ca- oder Zn-Stearat) oder Montanwachse (Mischungen aus geradkettigen, gesättigten Carbonsäuren mit Kettenlängen von 28 bis 32 C-Atomen) sowie niedermolekulare Polyethylen- bzw. Polypropylenwachse.

Als Beispiele für Weichmacher seien Phthalsäuredioctylester, Phthalsäuredibenzylester, Phthalsäurebutylbenzylester, Kohlenwasserstofföle, N-(n-Butyl)benzolsulfonamid genannt.

Die Formmassen können noch 0 bis 2 Gew.-% fluorhaltige Ethylenpolymerisate enthalten. Hierbei handelt es sich um Polymerisate des Ethylens mit einem Fluorgehalt von 55 bis 76 Gew.-%, vorzugsweise 70 bis 76 Gew.-%.

Beispiele hierfür sind Polytetrafluorethylen (PTFE), Tetrafluorethylen-hexafluorpropylen-Copolymere oder Tetrafluorethylen-Copolymerisate mit kleineren Anteilen (in der Regel bis zu 50 Gew.-%) copolymerisierbarer ethylenisch ungesättigter Monomerer. Diese werden z.B. von Schildknecht in "Vinyl and Related Polymers", Wiley-Verlag, 1952, Seite 484 bis 494 und von Wall in "Fluorpolymers" (Wiley Interscience, 1972) beschrieben.

Diese fluorhaltigen Ethylenpolymerisate liegen homogen verteilt in den Formmassen vor und weisen bevorzugt eine Teilchengröße d₅₀ (Zahlenmittelwert) im Bereich von 0,05 bis 10 µm, insbesondere von 0,1 bis 5 µm auf. Diese geringen Teilchengrößen lassen sich besonders bevorzugt durch Verwendung von wäßrigen Dispersionen von fluorhaltigen Ethylenpolymerisaten und deren Einarbeitung in eine Polyesterschmelze erzielen.

Als weitere Zusatzstoffe seien Flammschutzmittel genannt, welche üblicherweise in Mengen von 0 bis 30, vorzugsweise von 0 bis 25 in den erfindungsgemäßen Formmassen enthalten sein können. Geeignete Flammschutzmittel sind insbesondere halogenhaltige Verbindungen, wie bromierte Oligo- oder Polystyrole, stickstoffhaltige Verbindungen wie Melamin, Melamincyanurat, Guanidine oder phosphorhaltige Verbindungen jeglicher Art.

Die erfindungsgemäßen thermoplastischen Formmassen können nach an sich bekannten Verfahren hergestellt werden, in dem man die Ausgangskomponenten in üblichen Mischvorrichtungen wie Schneckenextrudern, Brabender-Mühlen oder Banbury-Mühlen mischt und anschließend extrudiert. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden. Die Mischtemperaturen liegen in der Regel bei 230 bis 290°C.

Nach einer bevorzugten Arbeitsweise können die Komponenten B) bis E) sowie gegebenenfalls übliche Zusatzstoffe F) mit einem Polyesterpräpolymeren gemischt, konfektioniert und granuliert werden. Das erhaltene Granulat wird in fester Phase anschließend unter Inertgas kontinuierlich oder diskontinuierlich bei einer Temperatur unterhalb des Schmelzpunktes der Komponente A) bis zur gewünschten Viskosität kondensiert.

In einer weiteren bevorzugten Arbeitsweise werden die Komponenten A) und D) vorab als Batch (Konzentrat) konfektioniert und anschließend mit den übrigen Komponenten in üblicher Weise gemischt.

Die erfindungsgemäßen thermoplastischen Formmassen zeichnen sich durch eine gute Kombination von mechanischen Eigenschaften, insbesondere Zähigkeit, Fließfähigkeit und Schmelzestabilität aus. Sie eignen sich zur Herstellung von Fasern, Folien und Formkörpern, insbesondere für Anwendungen im KFZ-Bereich und Elektronikbereich sowie als Haushaltsartikel und medizinische technische Geräte.

### Beispiele

### Komponente A1:

Polybutylenterephthalat mit einer Viskositätszahl von 130 ml/g und einem Carboxylendgruppengehalt von 34 mval/kg (Ultradur® B 4500 der BASF AG) (VZ gemessen in 0,5 gew.-%iger Lösung aus Phenol/o-Dichlorbenzol - 1:1-Mischung bei 25°C gemäß ISO 1628).

### Komponente A2:

Batch aus 80 Gew.-% Polybutylenterephthalat mit einer Viskositätszahl von 130 ml/g und einem Carboxylendgruppengehalt von 34 mval/kg (Ultradur® B 4500 der BASF AG) (VZ gemessen in 0,5 gew.-%iger Lösung aus Phenol/o-Dichlorbenzol - 1:1-Mischung bei 25°C, gemäß ISO 1628) und 20 Gew.-% Irgafos® PEPQ (Tetrakis-(2,4-di-tert.butylphenyl)-4,4'-diphenylen-diphosphonit) (Komponente D)

### Komponente B:

Polycarbonat mit einer VZ von 61 ml/g, (auf Bisphenol-A-Basis) gemessen in Phenol/Dichlormethan (1:1) (Lexan® 161 der Firma General Electric Plastics).

### Komponente C:

Methylmethacrylat/Butadien/Styrol-Pfropfkautschuk mit dreischaligem Aufbau (Polybutadien-Kern, Polystyrol-Schale, PMMA-Schale), bestehend aus 15,6 Gew.-% Methylmethacrylat, 16,7 Gew.-% Styrol und 67,7 Gew.-% Butadien.

### Komponente D:

Irgafos® PEPQ (Tetrakis-(2,4-di-tert.butylphenyl)-4,4'-diphenylen-diphosphonit)

### Komponente E:

### Zitronensäure-hydrat (99 % Reinheit)

### Herstellung und Prüfung der Formmassen

Zum Mischen der Komponenten wurde ein Zweiwellenextruder verwendet (250°C Gehäusetemperatur). Die Schmelze wurde durch ein Wasserbad geleitet und granuliert. Die Probekörper wurden bei einer Massetemperatur von 260°C hergestellt. Desweiteren wurden die mechanischen Eigenschaften der mittels Extruder hergestellten Proben bestimmt.

Die Wärmeformbeständigkeit wurde nach HDT/B ermittelt. Die Bruchdehnung der Produkte wurde an Zug-Stäben nach ISO 527 bestimmt. Die Schädigungsarbeit der Formmassen wurde nach DIN 53 433 bei -30°C gemessen.

Die Verarbeitungsstabilität wurde nach 2 Methoden bestimmt:
a) In einem DSC-Gerät wurden die Produkte zuerst von RT auf 250°C aufgeheizt (1. Durchlauf). Nach schnellem Abkühlen wurden die Proben dann mit einer Heizrate von 20 K/min auf 250°C erhitzt und 20 Minuten bei dieser Temperatur belassen. Anschließend wurde die Probe mit einer Heizrate von 10 K/min abgekühlt und dabei das Kristallisationsverhalten beobachtet. In der Tabelle ist die Halbwertsbreite (T_{1/2}) der Rekristallisationspeaks angegeben. Je stabiler das Material is, umso niedriger ist T_{1/2}.
b) Es wurden Platten bei 290°C hergestellt. Danach wurde die Schädigungsarbeit Wₛ bei -30°C bestimmt.

Die Zusammensetzungen der Formmassen und die Ergebnisse der Prüfungen sind der Tabelle 1 zu entnehmen.

**Tabelle 1:**

| Beispiel Nr. | V1 | V2 | 1 | 2 | V3 | 3 | 4 | V4 |
|---|---|---|---|---|---|---|---|---|
| Zusammensetzung der Komponenten [Gew.-%] | | | | | | | | |
| A1 | 39 | 35 | 35 | 39 | 59 | 59 | 55 | 60 |
| A2 | - | 5 | 5 | - | - | - | 5 | - |
| B | 50 | 50 | 49,8 | 49,8 | 40 | 39,7 | 39,7 | 39,7 |
| | | | | | | | | |
| C | 10 | 10 | 10 | 10 | 10 | 10 | 10 | 10 |
| D | 1 | - | - | 1 | 1 | 1 | - | - |
| E | - | - | 0,2 | 0,2 | - | 0,3 | 0,3 | 0,3 |
| HDT B [°C] | 93 | 95 | 95 | 94 | 76 | 87 | 86 | 73 |
| | | | | | | | | |
| εᵣ [%] | 44 | 78 | 122 | 102 | 34 | 105 | 110 | 107 |
| W_{s, -30}°C [Nm] | 91 | 95 | 97 | 93 | 76 | 88 | 86 | 83 |

| Verarbeitungsstabilität | | | | | | | | |
|---|---|---|---|---|---|---|---|---|
| T_{1/2} [°C] | 32 | 28 | 15 | 18 | 34 | 17 | 17 | 29 |
| | | | | | | | | |
| W_{s, -30°C}(290°C) [Nm] | 53 | 87 | 93 | 88 | 35 | 65 | 66 | 43 |
| V:Vergleichsversuche | | | | | | | | |

## Patentansprüche

1. Thermoplastische Formmassen enthaltend
A) 1 bis 97,85 Gew.-% mindestens eines thermoplastischen Polyesters
B) 1 bis 97,85 Gew.-% mindestens eines Polycarbonats
C) 1 bis 50 Gew.-% eines kautschukelastischen Polymerisates
D) 0,1 bis 5 Gew.-% eines phosphorhaltigen Stabilisators, wobei die Komponente D) aus einem organischen Phosphonit der allgemeinen Formel (I) aufgebaut ist: 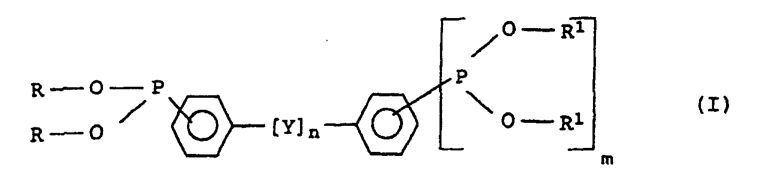 worin
m 0 oder 1,
n 0 oder 1,
Y eine Sauerstoff-Schwefel- oder 1,4-Phenylen-Brücke oder ein Brückenglied der Formel -CH(R²)-; alle R-O- und R¹-O-Gruppen unabhängig voneinander, den Rest eines aliphatischen, alicyclischen oder aromatischen Alkohols, der bis zu drei Hydroxylgruppen enthalten kann, wobei jedoch die Hydroxylgruppen nicht so angeordnet sind, daß sie Teile eines Phosphor-enthaltenden Ringes sein können (als monovalente R-O-Gruppen bezeichnet),
oder je zwei an ein Phosphoratom gebundene R-O-, bzw.
R¹-Gruppen, jeweils unabhängig voneinander zusammen den Rest eines aliphatischen, alicyclischen oder aromatischen Alkohols mit insgesamt bis zu drei Hydroxylgruppen (als bivalente R-O-, bzw. R¹-O-Gruppen bezeichnet),
R² Wasserstoff, C₁-C₈-Alkyl oder eine Gruppe der Formel COOR³ und
R³ C₁₋₈-Alkyl bedeuten
oder aus mindestens einem anorganischen Salz von Phosphorsäuren aufgebaut ist,
E) 0,05 bis 2 Gew.-% einer organischen Säure
F) 0 bis 60 Gew.-% weiterer Zusatzstoffe,
wobei die Gewichtsprozente der Komponenten A) bis F) 100 % ergeben.

2. Thermoplastische Formmassen nach Anspruch 1, in denen die Komponente A) aus einem Polyalkylenterephthalat mit 2 bis 10 C-Atomen im Alkoholteil aufgebaut ist.

3. Thermoplastische Formmassen nach den Ansprüchen 1 oder 2, in denen die Komponente E) aus Zitronensäure oder p-Toluolsulfonsäure oder deren Mischungen aufgebaut ist.

4. Verwendung der Formmassen gemäß den Ansprüchen 1 bis 3 zur Herstellung von Formkörpern, Folien oder Fasern.

5. Verwendung der Formmassen gemäß den Ansprüchen 1 bis 3 zur Herstellung von Karosserieaußenteilen.

6. Formteile jeglicher Art, erhältlich aus den thermoplastischen Formmassen gemäß den Ansprüchen 1 bis 3.

## Claims

1. A thermoplastic molding composition comprising
A) from 1 to 97.85% by weight of at least one thermoplastic polyester,
B) from 1 to 97.85% by weight of at least one polycarbonate,
C) from 1 to 50% by weight of an elastomeric polymer,
D) from 0.1 to 5% by weight of a phosphorus-containing stabilizer, wherein component D) is composed of an organic phosphonite of the formula (I): 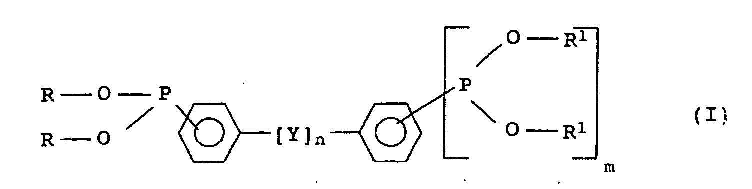 where
m is 0 or 1,
n is 0 or 1,
Y is an oxygen bridge, a sulfur bridge or a 1,4-phenylene bridge, or a bridging unit of the formula -CH(R²)-; each of the R-O- and R¹- groups, independently of one another, is the radical of an aliphatic, alicyclic or aromatic alcohol which may contain up to three hydroxyl groups, but excluding any arrangement of the hydroxyl groups which permits these to be part of a phosphorus-containing ring (termed monovalent R-O-groups),
or two R-O- or, respectively, R¹-O- groups, bonded to a phosphorus atom, in each case independently of one another, together are the radical of an aliphatic, alicyclic or aromatic alcohol having a total of up to three hydroxyl groups (termed bivalent R-O-, or, respectively, R¹-O-groups),
R² is hydrogen, C₁-C₈-alkyl or a group of the formula COOR³, and
R³ is C₁₋₈-alkyl
or is composed of at least one inorganic salt of phosphoric acids,
E) from 0.05 to 2% by weight of an organic acid, and
F) from 0 to 60% by weight of other additives,
where the percentages by weight of components A) to F) give 100%.

2. A thermoplastic molding composition as claimed in claim 1, wherein component A) is composed of a polyalkylene terephthalate having from 2 to 10 carbon atoms in the alcohol moiety.

3. A thermoplastic molding composition as claimed in claim 1 or 2, wherein component E) is composed of citric acid or of p-toluenesulfonic acid or of mixtures of these.

4. The use of the molding compositions as claimed in any of claims 1 to 3 for producing moldings, films or fibers.

5. The use of the molding compositions as claimed in any of claims 1 to 3 for producing exterior bodywork parts.

6. A molding of any type, obtainable from the thermoplastic molding compositions as claimed in any of claims 1 to 3.

## Revendications

1. Masses de moulage thermoplastiques contenant
A) de 1 à 97,85% en poids d'au moins un polyester thermoplastique,
B) de 1 à 97,85% en poids d'au moins un polycarbonate
C) de 1 à 50% en poids d'un polymère à élasticité de caoutchouc,
D) de 0,1 à 5% en poids d'un stabilisant contenant du phosphore, le composant D) étant constitué d'un phosphonite organique de la formule générale (I) 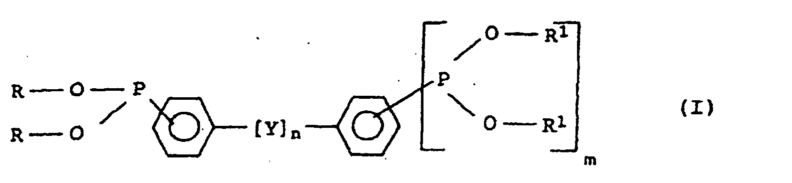 dans laquelle
M a une valeur de 0 ou 1,
n a une valeur de 0 ou 1,
Y représente un pont d'oxygène - soufre ou un pont de 1,4-phénylène ou un membre de pont de formule -CH (R²)- ; tous les groupes R-O et R¹-O représentant indépendamment les uns des autres le reste d'un alcool aliphatique, alicyclique ou aromatique, qui peut contenir jusqu'à trois groupes hydroxyle, les groupes hydroxyle n'étant toutefois pas disposés de manière à pouvoir faire partie d'un noyau contenant du phosphore (désignés comme groupes R-O monovalents),
ou bien chaque paire de groupes R-O ou R¹ liés à un atome de phosphore représentent à chaque fois ensemble, indépendamment les uns des autres, le reste d'un alcool aliphatique, alicyclique ou aromatique comportant au total jusqu'à trois groupes hydroxyle (désignés comme groupes R-O ou R¹-O bivalents),
R² représente de l'hydrogène, un radical alkyle en C₁ à C₈ ou un groupe de formule COOR³ et
R³ représente un radical alkyle en C₁ à C₈
ou est constitué d'au moins un sel inorganique d'acide phosphorique,
E) de 0,05 à 2% en poids d'un acide organique
F) de 0 à 60% en poids d'autres additifs,
les pourcentages en poids des composants A) à F) totalisant 100%.

2. Masses de moulage thermoplastiques selon la revendication 1, dans lesquelles le composant A) est constitué d'un polyalkylène téréphtalate comportant de 2 à 10 atomes de C dans la partie alcool.

3. Masses de moulage thermoplastiques selon les revendications 1 ou 2, dans lesquelles le composant E) est constitué d'acide citrique ou d'acide p-toluène-sulfonique, ou leurs mélanges.

4. Utilisation des masses de moulage selon les revendications 1 à 3 pour la production de pièces moulées, de feuilles ou de fibres.

5. Utilisation des masses de moulage selon les revendications 1 à 3 pour la production d'éléments extérieurs de carrosseries.

6. Pièces moulées de tous types, que l'on peut obtenir à partir des masses de moulage thermoplastiques selon les revendications 1 à 3.
